# EUROPÄISCHE PATENTSCHRIFT

(11) **EP 1 609 703 B1**
(45) Veröffentlichungstag und Bekanntmachung des Hinweises auf die Patenterteilung: **17.12.2008**
(21) Anmeldenummer: 05013399.0
(22) Anmeldetag: 22.06.2005
(51) Int. Cl.: B62D 29/00, B62D 25/14, B62D 65/02, B60R 21/09

(54) **Querträger**
Transverse beam
Poutre transversale

(30) Priorität: 24.06.2004 DE 102004030689
(43) Veröffentlichungstag der Anmeldung: 28.12.2005
(73) Patentinhaber: Behr GmbH & Co. KG, 70469 Stuttgart (DE)
(72) Erfinder: Derleth, Martin, Dipl.-Ing. (FH), 97453 Schonungen (DE); Feith, Thomas, Dipl.-Ing., 70825 Korntal-Münchingen (DE); Merkle, Christian, 73655 Plüderhausen (DE); Wolf, Walter, Dipl.-Ing., 71570 Oppenweiler-Zell (DE)

(56) Entgegenhaltungen:
- DE-A1- 10 240 395
- US-A- 5 934 733
- US-B1- 6 387 533
- US-B2- 6 702 356

## Beschreibung

Die Erfindung betrifft einen Querträger gemäß dem Oberbegriff des Anspruchs 1.

Querträger bestehen üblicherweise aus Stahl, Aluminium oder Magnesium, wobei zur Befestigung von hieran anzubringenden Bauteilen, wie beispielsweise der Instrumententafel, der Lenksäule oder einem Airbag, an dem Querträger Halter angeschweißt oder angeschraubt sind, an welchen die entsprechenden Bauteile angeschraubt werden. Hierbei ist die Montage jedoch relativ aufwendig.

Des weiteren ist aus der gattungsbildenden DE 102 40 395 A1 ein Querträger für ein Kraftfahrzeug, welcher einen Rohrbogen aus einem Faserverbundwerkstoff oder einen Bogen in Metall-Kunststoffhybridbauweise umfasst, bekannt. Anschlusselemente für verschiedene Komponenten können direkt an den Querträger im Bereich des Rohrbogens bzw. des Bogens im Spritzgussverfahren angespritzt werden.

Ferner ist aus der US 5,934,733 ein extrudierter Querträger bekannt, welcher in Längsrichtung Führungsnuten aufweist, in welchen Anbauteile geführt werden können.

Es ist daher Aufgabe der Erfindung, einen verbesserten Querträger zur Verfügung zu stellen.

Diese Aufgabe wird gelöst durch einen Querträger mit den Merkmalen des Anspruchs 1. Vorteilhafte Ausgestaltungen sind Gegenstand der Unteransprüche.

Erfindungsgemäß ist ein Querträger vorgesehen, mit einem am Querträger vorgesehenen Halter, mit dessen Hilfe am Querträger ein Bauteil anbringbar ist, wobei der Halter einstückig mit dem Querträger ausgebildet ist. Dies vereinfacht die Montage, da eine Montage des Halters am Querträger entfällt. Ferner kann die Toleranz des Halters am Querträger durch das Werkzeug enger gehalten werden, so dass insbesondere Toleranzen im Sichtbereich verringert werden können. Ferner lassen sich durch die Verringerung der Anzahl der Bauteile auch die Logistik- und Montagekosten verringern.

Der Querträger ist als Hybridbauteil ausgebildet, insbesondere mit einem oder zwei Metallkörpem, die bevorzugt schalenförmig ausgebildet sind. Die Metallkörper sind zumindest bereichsweise innen und/oder außen von Kunststoff umgeben, wobei der Kunststoff auch eine Wabenstruktur und/oder Kanäle, beispielsweise zur Luftführung, aufweisen kann.

Der Halter ist durch einen an einem metallischen Grundkörper angespritzten Bereich bestehend aus Kunststoff oder ein in einen angespritzten Bereich eingespritztes Element gebildet, welches auch ganz oder bereichsweise von Kunststoff umgeben sein kann. Die Herstellung kann in einem Arbeitsgang mit der Herstellung des Querträgers erfolgen.

Der Halter umfasst eine Führung für das mit seiner Hilfe am Querträger anzubringende Element mit einem Freiheitsgrad in einer Richtung. Der Freiheitsgrad verläuft bevorzugt in Längsrichtung des Querträgers, jedoch sind auch andere Ausrichtungen möglich. Insbesondere im Falle einer Längserstreckung des Freiheitsgrades können Verzug in Folge von Alterung und Schwund minimiert werden. Ferner sind gezielte Los- und Festlager am Halter möglich, so dass eine optimierte Anbringung eines Bauteils am Querträger möglich ist.

Der Halter weist eine sich in Längsrichtung erstreckende Hinterschneidung auf oder ist als ein vorstehendes Profil gebildet. Die Hinterschneidung ist vorzugsweise eine T-Nut, eine V-Nut oder eine schwalbenschwanzförmige Nut, das vorstehende Profil ist bevorzugt ein T-, L-, Z-, U-Profil, ein Schwalbenschwanzprofil und/oder ein zylindrisches oder teilzylindrisches Profil. Weitere Profilformen sind möglich.

Bevorzugt ist am Halter eine Vorrichtung zur Fixierung oder ein Teil hiervon vorgesehen. Diese Vorrichtung kann durch miteinander fluchtende Öffnungen gebildet sein, in welche ein Stift eingesteckt ist.

Bevorzugt ist mindestens ein Anschlag vorgesehen, welcher Teil einer Vorrichtung zur Fixierung ist. Dabei kann der Anschlag im Falle eines als Längsführung ausgebildeten Halters an einem Ende des Halters vorgesehen sein. Die abschließende Fixierung kann auf der anderen Seite oder an einer anderen Stelle erfolgen.

Der Halter weist bevorzugt einen federnd ausgebildeten, hakenförmigen Bereich auf, welcher mit einem weiteren hakenförmigen Bereich zusammenwirkt, welcher an dem am Halter zu befestigenden Element vorgesehen ist. Dies ermöglicht eine schnelle Montage und Fixierung mittels Einrasten.

Ein derartiger Querträger ist bevorzugt im Cockpit eines Kraftfahrzeugs angeordnet, wobei mit Hilfe des Halters eine Befestigung der Instrumententafel vorgesehen ist. Hierfür verläuft der Halter bevorzugt in Längs- oder Querrichtung des Querträgers. Dies ermöglicht eine einfache und großflächige Anbringung der Instrumententafel am Querträger.

Bevorzugt ist eine Aufprallschutzvorrichtung vorgesehen, welche im Bedarfsfall, insbesondere im Falle eines Kopfaufpralls bei einem Crash, eine Verschiebbarkeit des Bauteils, insbesondere der Instrumententafel, auf den Querträger zu ermöglicht, so dass der Insasse vor Verletzungen bestmöglich geschützt ist. Dabei ist bevorzugt ein wegabhängiger Anstieg der zur Verschiebung erforderlichen Kraft gegeben, wobei die Kraft im Verhältnis zum Weg vorzugsweise zumindest linear, bevorzugt aber schneller, d.h. beispielsweise exponential, ansteigt.

Im Folgenden wird die Erfindung anhand von mehreren Ausführungsbeispielen, teilweise unter Bezugnahme auf die Zeichnung, im Einzelnen erläutert. In der Zeichnung zeigen:
- Fig. 1: eine Draufsicht auf einen Querträger mit Instrumententafel,
- Fig. 2: einen schematisch ausschnittsweise dargestellten Schnitt quer durch den Halterbereich des Querträgers und die In- strumententafel im Bereich II von Fig. 1 gemäß dem ersten Ausführungsbeispiel,
- Fig. 3: einen Querträger mit sechs schematisch dargestellten, einstückig mit dem Querträger ausgebildeten Haltern,
- Fig. 4: einen Ausschnitt eines Querträgers gemäß einem weiteren Ausführungsbeispiel mit Halter und teilweise dargestelltem, hieran angebrachten Bauteil, wobei ein Aufprallschutz vor- gesehen ist, und
- Fig. 5: einen Ausschnitt eines Querträgers gemäß einem weiteren Ausführungsbeispiel mit Halter mit Aufprallschutz und teil- weise dargestelltem, hieran angebrachten Bauteil, wobei im linken Teil der Normalzustand und im rechten Teil der Zu- stand nach einem Aufprall mit Deformation dargestellt ist, und
- Fig. 6: einen Ausschnitt eines zweischaligen Querträgers mit im Wesentlichen zylindrischen Halbschalen gemäß einem wei- teren Ausführungsbeispiel, und
- Fig. 7: einen Ausschnitt eines zweischaligen Querträgers mit im Wesentlichen U-förmigen Halbschalen gemäß einem weite- ren Ausführungsbeispiel, und
- Fig. 8: einen Ausschnitt eines zweischaligen Querträgers mit im Wesentlichen Z-förmigen Halbschalen gemäß einem weite- ren Ausführungsbeispiel, und
- Fig. 9: einen Querschnitt durch den Querträger nach Fig. 8, und
- Fig. 10: schematisch einen Querträger nach Fig. 8 mit zur Z- und X- Achse geneigten Schalenflächen.

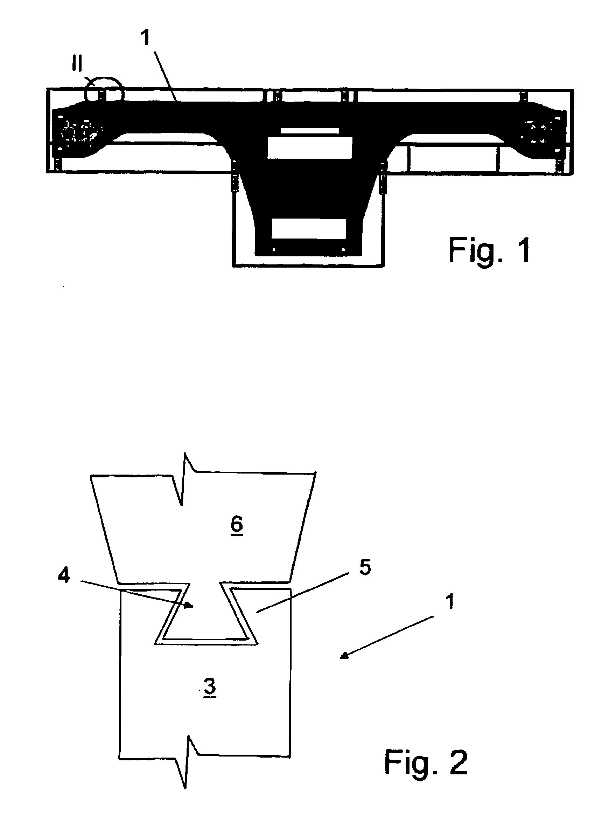

Ein als Hybridbauteil ausgebildeter Querträger 1, bestehend aus zwei miteinander verbundenen Blechhalbschalen (nicht näher dargestellt), die eine Kunststoffstruktur 3 aufweisen, welche bereichsweise um und in die Blechhalbschalen gespritzt ist, weist gemäß dem ersten, in den Figuren 1 und 2 dargestellten Ausführungsbeispiel einen in der Kunststoffstruktur 3 integriert in Form einer Schwalbenschwanzführung 4 ausgebildeten Halter 5 auf, welcher zur Befestigung der Instrumententafel 6 dient. Der Halter 5 verläuft vorliegend in Querrichtung des Querträgers 1. Zur leichteren Einführbarkeit der Instrumententafel 6, genauer gesagt des an der Instrumententafel 6 integriert ein- oder mehrstückig ausgebildeten Gegenstücks zur schwalbenschwanzförmigen Nut in der Kunststoffstruktur 3 ist das offene Nutende aufgeweitet ausgebildet, so dass ein einfaches Einführen und eine Zentrierung ohne Verklemmen möglich ist. Das andere Nutende ist mit einem Anschlag verschlossen, welcher derart ausgebildet ist, dass er die Endposition der Instrumententafel 6 definiert, so dass die Instrumententafel 6 bei der Montage einfach bis zum Anschlag eingeschoben wird. Die Fixierung der Instrumententafel 6 im Querträger 1 erfolgt mittels eines Stifts (nicht dargestellt), kann jedoch auch auf beliebige andere Weise erfolgen, beispielsweise durch eine Klemmschraube, einen Bolzen oder gegebenenfalls auch durch eine Clipsverbindung, wobei ein Teil, beispielsweise eine Öffnung, am Querträger 1 und ein Teil, beispielsweise ein Federarm, der in die Öffnung eingreift, an der Instrumententafel 6 ausgebildet ist.

Gemäß einem zweiten Ausführungsbeispiel, das nicht in der Zeichnung dargestellt ist, ist am Querträger einstückig mit der Kunststoffstruktur ein T-förmiges Profil ausgebildet, das in eine entsprechend ausgebildete Nut an einem am Querträger anzubringenden Bauteil, beispielsweise eine Instrumententafel, eingeführt wird. Ist das Bauteil von der Seite her aufgeschoben, so erfolgt eine Fixierung mittels eines Stifts, der in eine Öffnung im Bauteil, welche bei exakter Positionierung mit einer zweiten Öffnung im T-förmigen Profil fluchtet, eingeführt wird.

Entsprechend einer Variante des zweiten Ausführungsbeispiels ist, wie beim zweiten Ausführungsbeispiel ein T-förmiges Profil am Querträger ausgebildet, jedoch ist dieses durch eine Doppel-T-förmige Metalleinlage, welche eingespritzt ist, verstärkt, so dass größere Kräfte aufgenommen werden können. Die Funktion entspricht jedoch der des zweiten AusführungsbeiSpiels.

Gemäß einer zweiten Variante des zweiten Ausführungsbeispiels ist die Metalleinlage I-förmig ausgebildet, so dass im Querbereich keine Metallverstärkung vorgesehen ist. Diese Ausgestaltung ermöglicht eine biegesteife Ausgestaltung in einer Richtung sowie in -Z -Richtung (auf den Querträger zu) und eine weichere Ausgestaltung in +Z-Richtung (vom Querträger weg).

Als drittes Ausführungsbeispiel ist am Querträger ein Bereich mit einem L-förmig überstehenden Profil einstückig ausgebildet. Dabei kann es sich um einen vollständig durch einen Teil der Kunststoffstruktur gebildeten Bereich des Querträgers handeln. Gemäß einer ersten Variante ist eine Metalleinlage vorgesehen, die vollständig in die Kunststoffstruktur eingespritzt ist und gemäß einer zweiten Variante wird das L-förmig überstehende Profil durch ein auf seiner einen Seite in die Kunststoffstruktur eingespritztes Metallprofil gebildet, wobei das Metallprofil auf der eingespritzten Seite beispielsweise L- oder T-förmig ausgebildet sein kann.

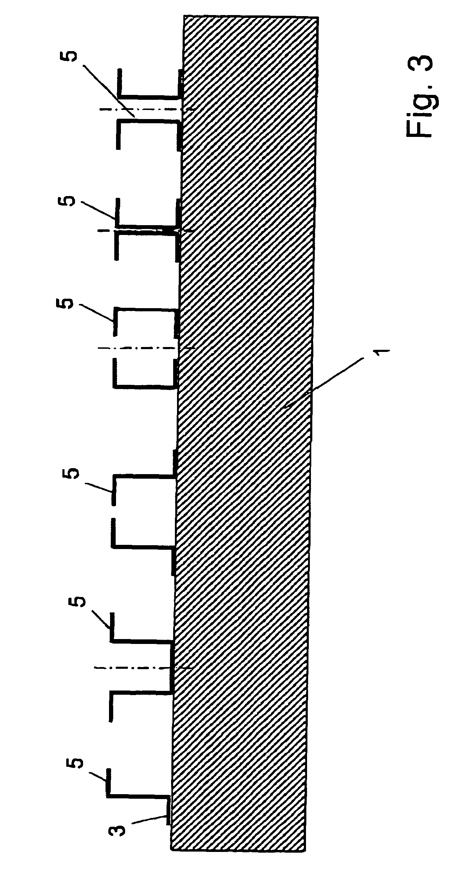

Gemäß einem vierten Ausführungsbeispiel ist am Querträger 1 ein Z-förmiges Profil einstückig mit der Kunststoffstruktur 3 ausgebildet, wie in Fig. 3 ganz links dargestellt. Zur Vereinfachung des Einführens ist das Profil am Einführende dünner ausgebildet und das seitlich vorstehende Ende kürzer ausgebildet. Ebenso kann sich die Höhe in Montagerichtung verringern. Das am Querträger 1 anzubringende Bauteil weist eine L-förmige Nut auf, deren Abmessungen mit denen des Z-förmigen Profils abgestimmt sind.

Entsprechend einem fünften Ausführungsbeispiel, das in Fig. 3 als zweites von links dargestellt ist, ist ein U-förmiges Profil vorgesehen, wobei das Profil derart am Querträger 1 angeordnet ist, dass es offen ist und seitlich überstehende Ränder aufweist. Das Bauteil, welches am Querträger 1 anzubringen ist, weist eine hinterschnittene Nut auf. Dieses Ausführungsbeispiel entspricht von seiner Funktion her dem in Fig. 3 ganz rechts dargestellten Ausführungsbeispiel gemäß dem zwei voneinander abgewandte C-förmige Profile vorgesehen sind.

Gemäß dem in Fig. 3 als drittes von links dargestellten Ausführungsbeispiel sind zwei spiegelbildlich zueinander angeordnete Z-förmige Profile vorgesehen, deren vom Querträger 1 entfernte Schenkel aufeinander zu zeigen. Zwischen die beiden Z-förmigen Profile wird ein T-förmiges Profil eingeführt, das am Bauteil vorgesehen ist, das am Querträger 1 befestigt werden soll. Von seiner Funktion her entspricht dieses Ausführungsbeispiel dem rechts hiervon in Fig. 3 dargestellten Ausführungsbeispiel, welches zwei C-förmige Profile aufweist, die einander zugewandt sind.

Entsprechend dem in Fig. 3 als zweites von rechts dargestellten Ausführungsbeispiel ist das am Querträger 1 ausgebildete Profil doppel-T-förmig ausgebildet. Das am Querträger 1 anzubringende Bauteil weist eine T-Nut auf, die in ihren Abmessungen etwa denen des Profils am Querträger 1 entspricht.

Entsprechend von nicht näher erläuterten Varianten zu den in Fig. 3 dargestellten Ausführungsbeispielen sind Verstärkungselemente in den Profilen vorgesehen, welche entsprechend den dick durchgezogenen Linien in Fig. 3 verlaufen und zumindest bereichsweise von der Kunststoffstruktur 3 umgeben sind oder nur aus Kunststoff bestehen.

Gemäß einem weiteren, nicht in der Zeichnung dargestellten Ausführungsbeispiel ist in der Kunststoffstruktur eine als Halter dienende Tasche ausgebildet, in welche ein Gegenstück des am Querträger zu befestigenden Bauteils eingesteckt wird. Die Fixierung kann mittels einer Clipsverbindung, eines Stifts, mittels Einklebens oder auf sonstige Weise erfolgen. Gemäß einer Variante ist die Tasche verstärkt ausgebildet, wobei ein verstärkendes Einlegeteil in den Kunststoff eingespritzt ist oder der metallische Teil des Querträgers entsprechend ausgebildet ist. Alternativ kann an Stelle einer Tasche auch eine Lasche ausgebildet sein.

Im Falle einer zweischaligen Ausgestaltung der Querträgergrundstruktur kann auch der überstehende Bund als Führung für ein am Querträger anzubringendes Bauteil dienen, wobei der Bund in Verbindung mit anderen Elementen direkt als Halter dient, so dass keine nachträglich am Querträger anzubringenden Halter, wie beim Stand der Technik, verwendet werden müssen. Das anzubringende Bauteil weist eine Nut auf, in welche der Bund bei der Montage eingeführt wird. Die Befestigung kann auf bekannte Weise erfolgen. Zum einfacheren Einführen kann der Bund angefast sein und/oder die Nut bei einer Einführung auf den Bund zu oben erweitert oder bei einer Einführung von der Seite seitlich erweitert ausgebildet sein.

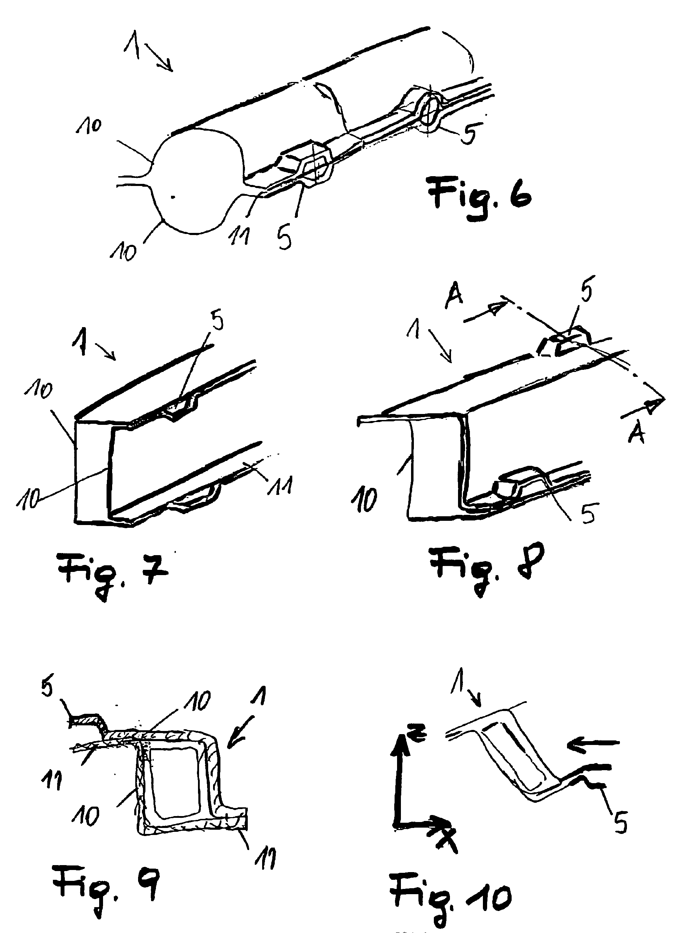

Ein Beispiel für einen aus zwei Schalen 10 bestehenden Querträger ist in Fig. 6 dargestellt. Zusätzlich zum Bund 11 sind in die Schalen 10 Halter 5 eingeformt. Die Halter 5 sind im vorliegenden Ausführungsbeispiel im Querschnitt von der Form eines Sechsecks oder eines Kreises in den Schalen 10 ausgeführt, wobei beliebige Ausgestaltungen, insbesondere weitere Polygonformen möglich sind.

Alternativ zu den im Wesentlichen halbzylindrischen Schalen der Fig. 6, ist in Fig. 7 ein Querträger aus zwei im Wesentlichen U-förmigen Schalen 10 mit unterschiedlich langen Schenkeln skizziert. Jeweils ein Halter 5 ist in Form einer Tasche im oberen Bereich der ersten, im Querschnitt kleineren Schale 10, sowie im unteren Bereich der zweiten im Querschnitt größeren Schale 10, ausgebildet. Alternativ können die beiden Halter auch nur in einer der beiden Schalen 10 ausgebildet sein.

In einer weiteren, in Fig. 8 dargestellten Variante besteht der Querträger 1 aus zwei Z-förmigen Schalen 10. Ein Schnitt im Bereich eines Halters 5 durch den Querträger 1 ist in Fig. 9 gezeigt. Durch das Abheben eines Schalenteils 10 im Endbereich bzw. im Bereich des Bundes 11 entsteht wird ein Halter 5 gebildet

Abhängig von der Einbaulage des Querträgers im Fahrzeug, ist es möglich die Ausbildung des Halters auf die bevorzugte Montagerichtung eines vom Halter 5 aufzunehmenden Teiles abzustimmen. Ein Beispiel hierfür ist in Fig. 10 schematisch skizziert. Ein Querträger 1 ist mit den Flächen seiner Schalen 10 geneigt zur Z- und X-Richtung angeordnet. Die Montagerichtung eines anzubauenden Teiles, angedeutet durch einen Pfeil, verläuft in X-Richtung. Zur einfacheren Aufnahme ist auch der Halter 5 im Wesentlichen in X-Richtung orientiert, wodurch dieser mit seinen Aufnahmeflächen im Wesentlichen geneigt zur Querträgerachse bzw. zu den die Schalen 10 des Querträgers bildenden Flächen angeordnet ist.

Ein dem Bund entsprechender Vorsprung, der als Halter dient, kann auch an einer beliebigen anderen Außenfläche des Querträgers durch die Kunststoffstruktur ausgebildet sein, verstärkt oder unverstärkt, je nach zu erwartender Belastung.

Die Abmessungen der Profile der Halter und der Gegenstücke am hieran anzubringenden Bauteil können bedarfsgerecht ausgebildet werden, so dass bestimmte gewünschte Eigenschaften erzielt werden können, wie insbesondere ein gewisses Spiel in eine bestimmte Richtung oder eine spielfreie und somit steife Anbindung in einer bestimmten Richtung. Dies kann insbesondere zur Erhöhung der Crashsicherheit gezielt eingesetzt werden, so dass beispielsweise die Anbindung der Instrumententafel in +Z-Richtung, das heißt vom Querträger weg, steif, also keine Durchbiegung erfolgen kann, wie beispielsweise für eine Airbag-Auslösung erforderlich, und in -Z-Richtung, das heißt auf den Querträger zu, in einem gewissen Bereich deformierbar ausgebildet sein kann, so dass ein gewisser Schutz im Falle eines Kopfaufpralls gegeben ist Die Freigabe in -Z-Richtung kann kraftabhängig sein, so dass ein Klappem im Normalbetrieb vermieden werden kann. Dies ist beispielsweise durch eine Anlage mit Reibung in einem Bereich des Profils möglich.

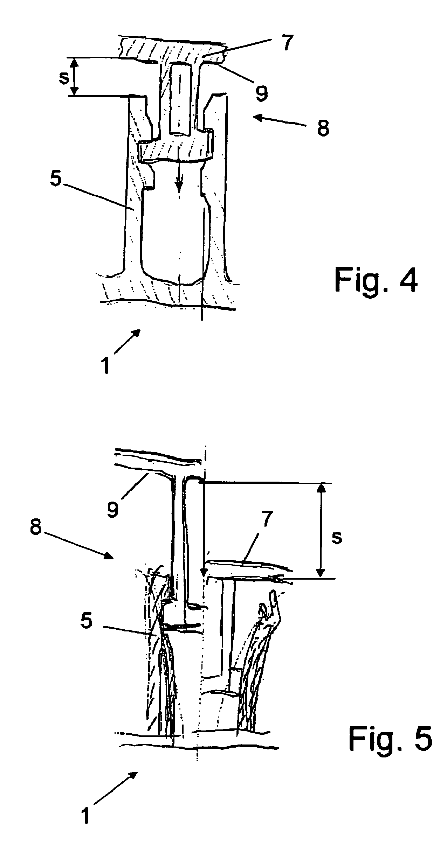

Fig. 4 zeigt einen Teil eines Querträgers 1 mit angeformten Halter 5 und einen Teil eines hieran angebrachten Bauteils 7. Der Halter 5 umfasst hierbei eine Aufprallschutzvorrichtung 8, welche sicherstellt, dass im Falle eines Crashs, insbesondere bei einem Kopfaufprall eines Insassens des Fahrzeugs, eine gewisse, definierte Deformation, vorliegend eine Verschiebung des Bauteils 7 in Pfeilrichtung um eine Strecke s, möglich ist, so dass das Verletzungsrisiko deutlich gesenkt werden kann.

Um eine Verschiebbarkeit bei im Normalbetrieb sicherer Fixierung sicherzustellen, weist der Halter 5 ein oben offenes U-förmiges Profil auf, wobei auf den Innenseiten der Schenkel zur Aufnahme eines verbreiterten Bereichs des Befestigungsbereichs des Bauteils 7 nutförmige Aufnahmen vorgesehen sind, die nach oben, also zum Bauteil 7 hin abgeschrägt sind, so dass im Crashfall eine kontinuierliche Verformung des Halters 5 und/oder des Befestigungsbereichs des Bauteils 7 und somit eine Verschiebung nach unten in den Halter 5 hinein möglich ist. Der untere Bereich des Halters 5 weist eine Breite auf, welche etwa des Abstands der nutförmigen Aufnahmen voneinander im Nutgrund oder der Breite des Bauteils 7 im breitesten Teil des Befestigungsbereichs entspricht.

Die Verschiebung des Bauteils 7 gegenüber dem Halter 5 wird durch eine gewisse Elastizität und/oder plastische Verformbarkeit gewährleistet und durch eine Anlage einer Fläche 9 des Bauteils 7 an einem Anlagebereich des Halters begrenzt. Bei der Verschiebung kann sowohl der Halter 5 als auch das Bauteil 7 bevorzugt elastisch, gegebenenfalls auch plastisch verformt werden.

Der Halter 5 gemäß dem in Fig. 5 dargestellten folgenden Ausführungsbeispiel weist ebenfalls eine Aufprallschutzvorrichtung 8 auf, welche eine Verschiebbarkeit um eine belastungsabhängige Strecke s des Bauteils 7 auf den Querträger 1 zu im Bedarfsfall ermöglicht. Die Ausgestaltung des Befestigungsbereichs des Bauteils 7 entspricht der des vorherigen Ausführungsbeispiels. Die Funktion ist im Wesentlichen die Gleiche, wie im zuvor beschriebenen Ausführungsbeispiel, jedoch erfolgt ausschließlich eine elastische Verformung des Halters 5, welcher sich aufweitet. Die Schräge, welche in ihrer Funktion der o. g. Abschrägung entspricht, ist hierbei aber deutlich flacher ausgebildet, so dass ein kontinuierlicher Anstieg der Kraft in Abhängigkeit des Verformungsweges bis zum Anschlag der Anlageflächen gegeben ist. Die Verschiebung des Bauteils 7 gegenüber dem Halter 5 wird eine Anlage einer Fläche 9 des Bauteils 7 an einem Anlagebereich des Halters begrenzt.

## Patentansprüche

1. Querträger, ausgebildet als Hybridbauteil, mit einem am Querträger (1) vorgesehenen Halter (5) mit dessen Hilfe am Querträger (1) ein Bauteil (7) anbringbar ist, wobei der Halter (5) einstückig durch einen an einem metallischen Grundkörper angespritzten Bereich bestehend aus Kunststoff oder ein in einen angespritzten Bereich eingespritztes Element mit dem Querträger (1) ausgebildet ist, wobei der Halter eine Führung für das mit seiner Hilfe am Querträger (1) anzubringende Bauteil (7) mit einem Freiheitsgrad in einer Richtung umfasst **dadurch gekennzeichnet, dass** der aus Kunststoff bestehende Halter eine sich in Längsrichtung des Querträgers erstreckende Hinterschneidung aufweist oder als ein vorstehendes Profil gebildet ist.

2. Querträger nach Anspruch 1, **dadurch gekennzeichnet, dass** die Hinterschneidung eine T-Nut, eine V-Nut oder eine schwalbenschwanzförmige Nut, beziehungsweise das vorstehende Profil ein T-, L-, Z-, U-Profil, ein Schwalbenschwanzprofil und/oder ein zylindrisches oder teilzylindrisches Profil ist.

3. Querträger nach einem der vorhergehenden Ansprüche, **dadurch gekennzeichnet, dass** am Halter eine Vorrichtung zur Fixierung oder ein Teil hiervon vorgesehen ist.

4. Querträger nach einem der vorhergehenden Ansprüche, **dadurch gekennzeichnet, dass** mindestens ein Anschlag vorgesehen ist, welcher Teil einer Vorrichtung zur Fixierung ist.

5. Querträger nach einem der vorhergehenden Ansprüche, **dadurch gekennzeichnet, dass** der Halter einen federnd ausgebildeten, hakenförmigen Bereich aufweist, welcher mit einem weiteren hakenförmigen Bereich zusammenwirkt, welcher an dem am Halter zu befestigenden Element vorgesehen ist.

6. Querträger nach einem der vorhergehenden Ansprüche, **dadurch gekennzeichnet, dass** der Halter eine Aufprallschutzvorrichtung (8) aufweist.

7. Querträger nach Anspruch 6, **dadurch gekennzeichnet, dass** die Aufprallschutzvorrichtung (8) eine definierte Verschiebung des Bauteils (7) gegenüber dem Halter (5) um eine Strecke (s) ermöglicht.

8. Querträger nach Anspruch 6 oder 7, **dadurch gekennzeichnet, dass** im Bedarfsfall eine Verformung des Halters (5) erfolgt, wobei die erforderliche Kraft zur Verschiebung des Bauteils (7) auf den Halter (5) zu in Abhängigkeit vom Verschiebeweg steht.

9. Querträger nach Anspruch 8, **dadurch gekennzeichnet, dass** die Kraft mit zunehmendem Verschiebeweg ansteigt, insbesondere mit einem linearen Verlauf oder einem schneller in Abhängigkeit des Weges ansteigenden Verlauf.

10. Querträger nach einem der vorhergehenden Ansprüche, **dadurch gekennzeichnet, dass** der Halter integriert einen elektrischen Anschluss aufweist.

11. Cockpitanordnung mit einem Querträger (1) gemäß einem der vorhergehenden Ansprüche, und einer Instrumententafel (6), die am Querträger (1) mittels eines sich zumindest über einen Teil des Querträgers (1) in dessen Längsrichtung erstreckenden Halters (5) angebracht ist, wofür die Instrumententafel (6) von einer Seite des Querträgers (1) her mit einem Gegenstück zum Halter (5) in denselben einführbar ist.

## Claims

1. Transverse beam, formed as a hybrid component, with a holder (5) provided on the transverse beam (1) with the help of which a component (7) can be attached to the transverse beam (1), the holder (5) being formed integrally with the transverse beam (1) by an area consisting of plastic injected onto a metallic main body or an element injected into an injected area, such that the holder comprises a guide for the component (7) to be attached with its help to the transverse beam (1), said guide having a degree of freedom in one direction, **characterised in that** the holder consisting of plastic has an undercut that extends in the longitudinal direction of the transverse beam, or is made as a projecting profile.

2. Transverse beam according to Claim 1, **characterised in that** the undercut is a T-groove, a V-groove or a swallowtail-shaped groove, or the projecting profile is a T-, L-, Z- or U-shaped profile, a swallowtail profile and/or a cylindrical or part-cylindrical profile.

3. Transverse beam according to either of the preceding claims, **characterised in that** a fixing device or part thereof is provided on the holder.

4. Transverse beam according to any of the preceding claims, **characterised in that** at least one abutment is provided, which is part of a fixing device.

5. Transverse beam according to any of the preceding claims, **characterised in that** the holder comprises a hook-shaped, springy area which co-operates with another hook-shaped area provided on the element to be attached to the holder.

6. Transverse beam according to any of the preceding claims, **characterised in that** the holder comprises an impact protection device (8).

7. Transverse beam according to Claim 6, **characterised in that** the impact protection device (8) enables a defined displacement of the component (7) relative to the holder (5) by a certain distance (s).

8. Transverse beam according to Claims 6 or 7, **characterised in that** in case of need a deformation of the holder (5) takes place, such that the force required to displace the component (7) on the holder (5) depends on the displacement path.

9. Transverse beam according to Claim 8, **characterised in that** the said force increases with increasing displacement path, in particular varying linearly or increasing more rapidly as a function of the said path.

10. Transverse beam according to any of the preceding claims, **characterised in that** the holder comprises an integrated electrical contact.

11. Cockpit arrangement with a transverse beam (1) according to any of the preceding claims and an instrument panel (6) attached to the transverse beam (1) by means of a holder (5) that extends at least over part of the transverse beam (1) in its longitudinal direction, for which purpose the instrument panel (6) can be introduced with a mating section into the holder (5) from one side of the transverse beam (1).

## Revendications

1. Traverse configurée comme une pièce de structure hybride comprenant une pièce de fixation (5) prévue sur la traverse (1), pièce de fixation à l'aide de laquelle une pièce de structure (7) peut être fixée sur la traverse (1), où la pièce de fixation (5) en matière plastique est configurée en formant une seule et même pièce avec la traverse (1), par une zone moulée par injection sur un corps de base métallique, ou bien par un élément injecté dans une zone moulée par injection, où la pièce de fixation comporte un guidage pour la pièce de structure (7) à fixer sur la traverse (1) à l'aide de ladite pièce de fixation, avec un degré de liberté dans une direction,
**caractérisée en ce que** la pièce de fixation en matière plastique présente une contre-dépouille s'étendant dans le sens longitudinal de la traverse, ou bien est formée comme un profilé faisant saillie.

2. Traverse selon la revendication 1, **caractérisée en ce que** la contre-dépouille est une rainure en T, une rainure en V ou une rainure en forme de queue d'aronde, ou bien le profilé faisant saillie est un profilé en T, en L, en Z, en U, un profilé en queue d'aronde et / ou un profilé cylindrique ou partiellement cylindrique.

3. Traverse selon l'une ou l'autre des revendications précédentes, **caractérisée en ce qu'**il est prévu, sur la pièce de fixation, un dispositif de fixation ou bien une pièce de celui-ci.

4. Traverse selon l'une quelconque des revendications précédentes, **caractérisée en ce qu'**il est prévu au moins une butée qui fait partie d'un dispositif de fixation.

5. Traverse selon l'une quelconque des revendications précédentes, **caractérisée en ce que** la pièce de fixation présente une zone en forme de crochet, configurée en faisant ressort, zone qui agit de façon conjointe avec une autre zone, en forme de crochet, qui est prévue sur l'élément à fixer sur la pièce de fixation.

6. Traverse selon l'une quelconque des revendications précédentes, **caractérisée en ce que** la pièce de fixation présente un dispositif de protection (8) contre les chocs.

7. Traverse selon la revendication 6, **caractérisée en ce que** le dispositif de protection (8) contre les chocs permet un déplacement défini de la pièce de structure (7), d'une distance (s), par rapport à la pièce de fixation (5).

8. Traverse selon la revendication 6 ou 7, **caractérisée en ce que,** en cas de besoin, il se produit une déformation de la pièce de fixation (5), ou la force nécessaire au déplacement de la pièce de structure (7), en direction de la pièce de fixation (5), dépend de la course de déplacement.

9. Traverse selon la revendication 8, **caractérisée en ce que** la force augmente avec une course de déplacement croissante, en particulier avec un profil linéaire ou un profil augmentant plus vite en fonction de la course.

10. Traverse selon l'une quelconque des revendications précédentes, **caractérisée en ce que** la pièce de fixation présente une prise électrique montée de façon intégrée.

11. Agencement du poste de conduite comprenant une traverse (1) conformément à l'une quelconque des revendications précédentes, et un tableau de bord (6) qui est fixé, sur la traverse (1), au moyen d'une pièce de fixation (5) s'étendant au moins sur une partie de la traverse (1), dans le sens longitudinal de celle-ci, où, pour ce faire, le tableau de bord (6) peut, par un côté de la traverse (1), être introduit dans la pièce de fixation (5), avec un pendant de celle-ci.
